# FASCICULE DE BREVET EUROPEEN

(11) **EP 4 243 631 B1**
(45) Date de publication et mention de la délivrance du brevet: **29.04.2026**
(21) Numéro de dépôt: 21819929.7
(22) Date de dépôt: 15.11.2021
(51) Int. Cl.: A23L 11/60, A23J 1/14, A23J 3/14, A23L 33/16, A23L 33/185, A23L 33/00

(54) **COMPOSITION NUTRITIONNELLE POUR USAGE MEDICAL FORMULEE A PARTIR D'UNE PROTEINE VEGETALE**
ERNÄHRUNGSZUSAMMENSETZUNG ZUR MEDIZINISCHEN VERWENDUNG, FORMULIERT AUS EINEM PFLANZENPROTEIN
NUTRITIONAL COMPOSITION FOR MEDICAL USE, FORMULATED FROM A PLANT PROTEIN

(30) Priorité: 13.11.2020 FR 2011667
(43) Date de publication de la demande: 20.09.2023
(73) Titulaire: Even Santé Industrie, 29260 Ploudaniel (FR)
(72) Inventeur: GARCON, Stéphanie, 29260 LESNEVEN (FR)
(74) Mandataire: IP Trust
(86) Numéro de dépôt international: PCT/FR2021/052016
(87) Numéro de publication internationale: WO 2022/101594

(56) Documents cités:
- WO-A1-2010/126362
- WO-A1-2017/129921
- WO-A1-2020/061698
- US-A1- 2019 374 569
- DATABASE GNPD [online] MINTEL; 1 June 2017 (2017-06-01), ANONYMOUS: "Keto Drink with Banana Flavour", XP055822018, retrieved from https://www.gnpd.com/sinatra/recordpage/4815965/ Database accession no. 4815965

## Description

La présente invention a trait au domaine des compositions nutritionelles liquides à usage médical. Plus particulièrement, elle concerne une composition nutritionnelle liquide formulée à partir d'une protéine uniquement d'origine végétale ; la protéine utilisée provient exclusivement de pois jaune. Elle concerne également un procédé de préparation d'une telle composition.

L'invention est définie par les revendications 1-4 annexées.

### Domaine de l'invention

L'offre alimentaire de produits d'origine végétale est en forte croissance en réponse aux attentes de consommateurs souhaitant diminuer ou mettre un terme à leur consommation de produits d'orignie animale. Sont concernés les produits carnés, les œufs et les produits laitiers. La nutrition médicale ne fait pas exception à cette tendance et de nouvelles compositions nutritionnelles à usage médical à base de protéine végétale font leur apparition. Dans la gamme des produits diététiques, des boissons fonctionnelles et des produits infantiles, il existe également des produits contenant des protéines végétales ; celles-ci sont soit associées à des protéines laitières, soit utilisées comme seule source protéique mais dans ce cas la teneur totale en protéines est faible, autour de 4g/ 100 ml de composition. L'objectif de ces produits est soit de répondre à la tendance « Vegan » du marché (exemple des boissons fonctionnelles), soit de proposer une alternative aux protéines laitières, en cas d'intolérance. On retrouve beaucoup la protéine de soja, et également la protéine de riz dans le cas de l'infantile. Par ailleurs, dans certaines boissons fonctionnelles qui se déclarent comme étant des « repas complets », plusieurs sources de protéines végétales sont mélangées (dont le pois). Mais il s'agit souvent de produits en poudre à reconstituer, ou, s'ils sont prêts à consommer, leur teneur en protéines se situe davantage dans une variation autour de 5g/100ml. Ces produits ne sont pas adaptés à un usage médical.

Les formulateurs de compositions nutritionnelles à usage médical disposent des mêmes sources de protéines végétales accessibles sur le marché obtenues à partir de soja, de riz, de pois, de lentilles et autres légumineuses.

L'utilisation de protéines de riz est limitée par le fait qu'elles sont peu solubles, et qu'il est donc difficile d'enrichir suffisamment la composition pour répondre à l'objectif nutritionnel. De plus, le rendu organoleptique n'est pas satisfaisant, certains produits ayant un goût amer.

Les protéines de pois présentent un taux protéique plus intéressant que les autres légumineuses mais la viscosité, le goût (plus ou moins amer) et la couleur du produit formulé sont variables, impactés par la qualité de la protéine de pois de départ. De plus, le pois est moins riche en minéraux et acides aminés que les ingrédients laitiers, ce qui explique que les formulateurs de compositions nutritionnelles à usage médical se soient jusqu'alors orientés préférentiellement vers les protéines laitières.

WO2017/129921 décrit des compositions nutritionnelles contenant un isolat de protéines de pois. La teneur en protéines de pois envisagée est au maximum de 5g/100ml. Ce document décrit crèmes ou desserts glacés formulés avec un taux de protéines de pois allant jusqu'à 3,5g/100 mL.

Le produit "Keto-Drink with Banana Flavour" de Tavarlin, vendu en Allemagne à partir de Juin 2017, selon la base de données Mintel (voir son ID 4815965), est une boisson de substitution de repas prête à boire, riche en calories, destinée à la prise en charge diététique de la malnutrition due à la maladie, comprenant 6.7g /100mL de protéines, apportées par la protéine de pois.

Concernant les autres légumineuses, la teneur en protéines des ingrédients est très faible. Il faut donc en ajouter à très forte dose afin d'atteindre la cible en protéines attendue dans le produit fini. De ce fait, le produit fini contenant une très forte teneur en protéines issues de des légumineuses n'est pas stable au traitement thermique.

L'utilisation de protéines végétales en nutrition médicale présente donc deux enjeux majeurs :
la stabilité de la composition après enrichissement protéique et minéral et l'obtention de propriétés organoleptiques satisfaisantes pour le consommateur.

Les produits de nutrition à base de protéines végétales disponibles sur le marché présentent une teneur protéique maximale de 4g par 100 mL de composition.

Il existe un besoin de disposer de compositions nutritionnelles à base de protéine végétale, suffisamment riches en protéine, en acides aminés et minérauxpour répondre aux besoins de patients dénutris dans le cadre de soins à l'hopital ou à domicile. Ces compositions doivent être liquides et stables dans le temps tout en présentant des propriétés organoleptiques intéressantes.

### Exposé de l'invention

L'objectif est de répondre à un besoin grandissant de la population souhaitant avoir une alternative à la protéine de lait, y compris dans le cadre d'une alimentation médicale.

La présente invention y répond en proposant une nouvelle formulation à base de protéines entières uniquement issues du pois jaune. Elle comprend entre 6 et 10 g de protéines, entre 5 et 10 g de lipides et entre 15 et 25 g de carbohydrates pour 100 ml de composition, au moins 53 mg/100mL de Ca pour une composition à 150kcal et elle présente une valeur énergétique comprise entre 150 et 250 kcal /100 ml, au moins 65% du calcium étant apporté sous forme insoluble, et une viscosité inférieure à 120 mPas⁻¹ (mesurée à 20°C sur un viscosimètre rotatif de type « cup and bob »), ainsi qu'un pH compris entre 7,1 et 7,4.

L'invention concerne également un procédé de préparation d'une telle composition comprenant les étapes de :
- Hydratation d'un isolat de protéines entières de pois jaune
- Mélange dudit isolat avec les autres ingrédients et notamment les lipides, les carbohydrates, les minéraux et les vitamines
- ajustement du pH entre 7.1 et 7.5
- Stérilisation du mélange obtenu par injection directe de vapeur,
dans lequel au moins 65% du calcium apporté est sous forme insoluble.

### Avantages de l'invention

La présente invention propose une nouvelle composition nutritionnelle à usage médical dans laquelle la protéine est exclusivement fournie par de la protéine entière de pois jaune, et dans laquelle le taux protéique est d'au moins 6 g pour 100 ml de composition. Aucun produit de ce type n'est actuellement disponible sur le marché et il répond à un besoin médical non satisfait.

Cette composition répond aux exigences des produits de nutrition dits « DADFMS ». Les Denrées Alimentaires Destinées à des fins médicales spéciales (DADFMS) sont définis dans le réglement EU 2016/128, comme une « catégorie d'aliments destinés à une alimentation particulière. Spécialement traités ou formulés, ils sont destinés à répondre aux besoins nutritionnels des patients et ne peuvent être utilisés que sous contrôle médical ». Ici, les compositions présentent un profil en minéraux et vitamines complet selon le Règlement DADFMS.

En particulier, les compositions présentent un profil minéral calcique conforme à ce Règlement. La quantité de calcium est par conséquent d'au moins 53 mg/100mL pour une composition à 150kcal. Or, les ions calciques sont connus pour déstabiliser les compositions lorsqu'ils sont ajoutés en grande quantité. L'invention répond à ce problème en proposant que l'apport de calcium se trouve, pour au moins 65%, sous forme insoluble. Cette proportion permet d'assurer la stabilité de la composition (pas de déphasage, pas crémage en surface, pas de points blancs). De plus, il a été montré par l'inventeur que la forme calcique utilisée influence le goût.

De plus, les compositions selon l'invention entrent dans la catégorie des produits hypercaloriques, du fait de leur valeur énergétique supérieure ou égale à 150 kcal pour 100 mL de composition.

L'isolat de protéines de pois montre une composition en acides aminés essentiels supérieure aux recommandations FAO de 2013 (FAO of the United Nations, 2013), sauf en ce qui concerne les acides aminés soufrés (AAS, cystéine + méthionine). Un simple enrichissement en ces acides aminés suffit donc pour égaler, voire supplanter l'apport en acides aminés d'une composition à base de protéines laitières, et de suivre les recommandations FAO. La composition nutritonnelle selon l'invention est donc intéressante du point de vue de l'apport en acides aminés.

La composition selon l'invention a l'avantage d'être stable dans le temps et de rester liquide, malgré un taux de protéines de pois compris entre 6 et 10 g par 100 mL. En effet, une des difficultés dans la formulation de produits riches en protéine végétale est de parvenir à un produit stable. Ce problème a été résolu grâce au procédé selon l'invention. Il apparait que la combinaison d'étapes telles que décrites ici, en particulier (i) l'association d'une étape d'hydratation des protéines de pois préalable au mélange avec les autres ingrédients, avec (ii) une stérilisation par injection directe de vapeur et (iii) un ajout de calcium constitué d'au moins 65% de calcium sous une forme insoluble permet de produire une composition stable, dont la viscosité est maitrisée et conservée dans le temps. Ainsi, les compositions sont stables au moins 6 mois à température ambiante (entre 4 et 25°C) ce qui est compatible avec une DDM (date de durabilité minimale) de 9 mois.

Une autre propriété intéressante de la composition selon l'invention est qu'elle ne présente pas d'arrière goût végétal prononcé, ni d'astringence. De manière surprenante, l'inventeur a mis en évidence que cette propriété est attribuable, au moins en partie, à la nature de la forme calcique ajoutée. Cette composition, associée à des arômes, permet de varier les saveurs. De plus, sa texture lisse et sa consistance liquide rendent agréable sa consommation par des patients, même affaiblis. Les propriétés organoleptiques sont donc satisfaisantes.

Enfin, le produit obtenu est adapté aux personnes allergiques aux protéines de lait. Il n'existe pas sur le marché de composition nutritionnelle présentant un taux protéique d'au moins 6g pour 100ml de composition et ne contenant pas de protéine laitière. De plus, le produit peut être formulé sans aucun autre ingrédient d'origine laitière pour satisfaire les besoins de personnes allergiques aux différents composants du lait, notamment le lactose. Ce produit répond donc à un besoin médical non satisfait.

Le procédé selon l'invention est également innovant par le fait qu'il combine des étapes-clés pour l'obtention d'une composition présentant les propriétés décrites à savoir, une hydratation de l'isolat de protéines de pois avant mélange avec les autres ingrédients, un apport de calcium constitué d'au moins 65% de calcium sous une forme insoluble et une stérilisation par injection directe de vapeur.

### DESCRIPTION DETAILLEE DE L'INVENTION

Un premier objet de l'invention concerne une composition nutritionnelle liquide à base de protéines végétales
- comprenant pour 100 mL de composition :
   ∘ entre 6 et 10 g de protéines
   ∘ entre 5 et 10 g de lipides
   ∘ une valeur énergétique comprise entre 150 et 250 kcal
- présentant une viscosité inférieure à 120 mPas⁻¹ à 20°C mesurée sur un viscosimètre rotatif de type « cup and bob »
- ayant un pH compris entre 7,1 et 7,4
caractérisée en ce que la protéine est constituée uniquement de protéines végétales entières issues du pois jaune et en ce qu'elle contient au moins 53 mg de calcium/100ml pour une composition à 150 kcal (par 100 mL), au moins 65% du calcium étant apporté sous forme insoluble.

Cette composition est formulée à partir de protéines exclusivement issues de protéines de pois jaune entières.

Par « pois jaune », on entend la variété *Pisum sativum.*

Par « protéine entière », on entend une protéine non hydrolysée, et plus particuliérement un isolat de protéines de pois.

Dans un mode de réalisation préféré de l'invention, les ingrédients autres que les protéines sont également d'origine végétale. En particulier, les lipides peuvent être des huiles végétales telles que de l'huile de colza, huile de tournesol, huile de soja, huile de palme, huile d'olive, huile de coco, etc... seules ou en mélange. Ainsi, le produit proposé à la consommation peut être adapté aux personnes ne consommant pas de produit d'origine animale ainsi qu'aux personnes allergiques ou intolérantes aux produits d'origine laitière.

Dans un autre mode de réalisation préféré, les carbohydrates sont constitués de saccharose, de sirop de glucose et/ ou de maltodextrines.

Les compositions présentent un profil en minéraux et en vitamines complet au regard du règlement DADFMS.

Les compositions peuvent contenir des arômes et des émulsifiants tels que la lécithine de soja ou de tournesol, ou encore des monodiglycérides d'acides gras, des sucrose ester, etc... pour améliorer l'appétance et la texture du produit.

Les compositions selon l'invention sont riches en énergie avec une valeur énergétique comprise entre 150 et 250 kcal / 100 mL de composition. Elles peuvent être qualifiées de « hypercaloriques » du fait de leur teneur énergétique supérieure à 150 kcal par 100 mL et être utilisées en tant que produits de nutrition médicale.

Les protéines de pois ont une faible teneur en calcium en général à inférieure à 100 mg pour 100g d'ingrédient en poudre, contre des valeurs généralement supérieures à 1500 mg de calcium pour 100g d'ingrédient pour des isolats de protéines laitières en poudre. Ainsi, les protéines de pois étant naturellement pauvres en calcium, il est nécessaire d'apporter du calcium lors de la formulation pour atteindre une quantité d'au moins 53mg/100mL pour une composition nutritionnelle à 150 kcal, et répondre aux critères de la règlementation DADFMS (voir ci-après). Pour obtenir les propriétés souhaitées (stabilité, viscosité), l'inventeur a mis en évidence qu'au moins 65% du calcium apporté doit être sous une forme insoluble. Des exemples de formes insolubles sont par exemple le citrate de calcium, l'oxyde de calcium, le carbonate de calcium, le phosphate de calcium, etc... D'autre part, des exemples de formes solubles sont le dihydroxyde de calcium et le chlorure de calcium.

Les formes de calcium insolubles peuvent être apportées, soit par un seule source de calcium, soit par un mélange de deux ou plus formes de calcium insolubles. Lorsque les formes insolubles représentent moins de 100% du calcium, elle sont constituées d'un mélange d'une ou plusieurs formes de calcium insolubles et solubles.

Dans un mode de réalisation particulier, les formes insolubles sont un mélange de phosphate tri calcique et de carbonate de calcium.

Les compositions sont liquides et présentent une viscosité inférieure à 120 mPas⁻¹ à 20°C mesurée sur un viscosimètre rotatif de type « cup and bob ». De préférence, leur viscosité est inférieure à 100 mPas⁻¹.

Le pH de ces compositions est compris entre 7,1 et 7,5.

Les compositions selon l'invention sont stables à la fois thermiquement lors de leur préparation et stables dans le temps, au moins 6 mois.

Par composition « stable », on entend une composition qui reste homogène, sans déphasage ou apparition de dépôt.

Dans un mode de réalisation particulier de l'invention, la composition comprend 6 g de protéines de pois jaune par 100 mL.

Dans un autre mode de réalisation particulier, la composition comprend 9 g protéines de pois jaune par 100 mL.

Les compositions selon l'invention constituent des produits de nutrition clinique destinés aux patients dénutris et à être distribués par les hôpitaux ou les pharmacies pour une prise à domicile.

Un second objet de l'invention concerne un procédé de préparation d'une composition telle que définie précédemment comprenant les étapes de :
- Hydratation d'un isolat de protéines entières de pois jaune
- Mélange dudit isolat avec les autres ingrédients, y compris du calcium dont au moins 65% est sous une forme insoluble
- Ajustement du pH entre 7,1 et 7,5
- Stérilisation du mélange obtenu par injection directe de vapeur.

L'isolat de protéine de pois jaune utilisé dans ce procédé se présente sous la forme d'une poudre comprenant au moins 80% de protéines, de préférence au moins 85% de protéines. De tels isolats sont disponibles dans le commerce. Il sont aujourdhui encore peu utilisés car leur formulation est plus difficile que celles des protéines laitières, les protéines végétales étant moins stables thermiquement.

L'isolat protéique est tout d'abord hydraté dans une solution aqueuse, préférentiellement de l'eau. De préférence, cette étape est réalisée par hydratation des protéines dans la solution chauffée entre 35°C et 65°C, de préférence entre 45°C et 60°C, pendant une durée allant de 20 min à 3 heures.

Les autres ingrédients constituant la composition sont en particulier les lipides, les carbohydrates, les minéraux et les vitamines. Il peut aussi s'agir des arômes et stabilisants ou texturants et épaississants éventuels.

Les ingrédients sont mélangés dans les proportions décrites précédemment à savoir entre 6 et 10 g de protéine entière de pois jaune, entre 5 et 10 g de lipides, entre 15 et 25 g de carbohydrates.

Concernant l'apport de calcium, la quantité apportée dépend de la formulation et est déterminée de façon à être conforme au Règlement DADFMS. Par exemple, la quantité de Ca est comprise à minima entre 53 mg/100ml pour une composition à 150 kcal, et 88 mg/100ml pour une composition à 250 kcal/100ml au regard du règlement DADFMS. Quelque soit la composition, cet apport est constitué à au moins 65% en poids du calcium total apporté par une forme calcique insoluble. Dans un mode de réalisation préféré, le calcium apporté est à au moins 70% sous forme insoluble. Dans un mode de réalisation particulier, entre 70 et 80% du calcium ajouté se trouve sous forme insoluble.

Le pH est ajusté à une valeur comprise entre 7,1 et 7,4.

La composition est ensuite stérilisée en appliquant un traitement thermique UHT, par exemple par injection directe de vapeur /avec une valeur stérilisatrice > 15.

Le produit résultant de ce procédé est liquide et stable dans le temps, permettant d'atteindre une DDM d'au moins 6 mois.

### EXEMPLES

### EXEMPLE 1 : Préparation d'une composition nutritionnelle liquide comprenant de la protéine de pois jaune entière comme seule source protéique

Les étapes de préparation sont résumées par le diagramme suivant :

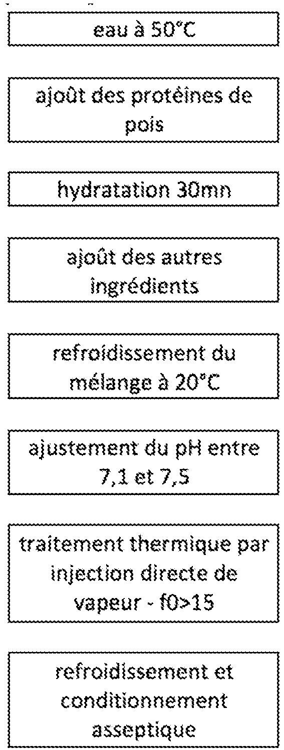

Une étape d'homogénéisation peut être nécessaire en fin de procédé.

Des exemples de compositions selon l'invention sont décrits au Tableau 1

**Tableau 1 : Compositions selon l'invention (pour 100 mL)**

| **Ingrédients** | **Composition A** | **Composition B** |
|---|---|---|
| Protéines de pois jaune | 6g/100ml | 9g/100ml |
| Lipides | 6g/100ml | 8,3g/100ml |
| carbohydrates | 18g/100ml | 22.3g/100ml |
| Viscosité (20°C - 50s-1) | <100 mPas | <100 mPas |
| Valeur energétique | 150 kcal/100ml | 200 kcal/100ml |
| Quantité de Ca | 60mg/100ml | 90 mg/100ml |
| *dont Ca insoluble* | *70%* | *70%* |

### EXEMPLE 2 : Caractéristiques de compositions selon l'invention en fonction de la forme calcique utilisée

Des compositions à 9g/100mL de protéines entières de pois jaune ont été préparées en faisant varier la forme du calcium ajouté. Dans cet exemple, le calcium insoluble est sous forme d'un mélange de phosphate tri calcique et de carbonate de calcium. Les 3 compositions sont conformes au Règlement DADFMS.

**Tableau 2 : Viscosité et stabilité de compositions nutritionnelles à base de protéines de pois jaune en fonction de la forme calcique ajoutée.**

| **Formule** | **B1** | **B2** | **B3** |
|---|---|---|---|
| protéines (g/100ml) *(pois jaune)* | 9 | 9 | 9 |
| lipides (g/100ml) | 8,3 | 8,3 | 8,3 |
| glucides (g/100ml) | 22,3 | 22,3 | 22,3 |
| valeur énergétique (kcal/100ml) | 200 | 200 | 200 |
| Ca (mg/100ml) | 90 | 90 | 90 |
| Forme du calcium ajouté | 100% sous forme de sels solubles | 100% sous forme de sels insolubles | 50% formes solubles / 50% formes insolubles |
| viscosité en mPas à J+7 (100s-1/20°C) | 65 | 54 | 46 |
| observation stabilité produit fini à J+7 | séparation de phases, crémage en surface, points blancs | produit stable goût très végétal | séparation de phases, crémage en surface, points blancs |

## Revendications

1. Composition nutritionnelle liquide à base de protéines végétales
- comprenant pour 100 ml de composition :
∘ entre 6 et 10 g de protéine
∘ entre 5 et 10 g de lipides
∘ entre 15 et 25 g de carbohydrates
∘ une valeur énergétique comprise entre 150 et 250 kcal
- présentant une viscosité inférieure à 120mPas⁻¹ à 20°C mesurée sur un viscosimètre rotatif de type « cup and bob »
- ayant un pH compris entre 7,1 et 7,4
**caractérisée en ce que** :
- la protéine est constituée uniquement de protéines végétales entières issues du pois jaune *Pisum sativum*
- elle contient au moins 53 mg de calcium/100ml pour une composition à 150 kcal,
et
- au moins 65% du calcium apporté est sous forme insoluble.

2. Composition selon la revendication 1 **caractérisée en ce que** lesdits lipides sont des huiles végétales.

3. Procédé de préparation d'une composition telle que définie à l'une des revendications 1 à 2 comprenant les étapes de :
- Hydratation d'un isolat de protéines entières de pois jaune *Pisum sativa*
- Mélange dudit isolat avec les autres ingrédients et notamment les lipides, les carbohydrates, les minéraux et les vitamines, le calcium apporté étant à au moins 65% sous forme insoluble
- Ajustement du pH entre 7,1 et 7,5
- Stérilisation du mélange obtenu par injection directe de vapeur.

4. Procédé selon la revendication 3 **caractérisé en ce que** ladite étape d'hydratation est réalisée en chauffant à une température comprise entre 35°C et 65°C.

## Patentansprüche

1. Flüssige Nahrungszusammensetzung auf Basis pflanzlicher Proteine
- umfassend pro 100 ml Zusammensetzung:
∘ zwischen 6 und 10 g Proteine
∘ zwischen 5 und 10 g Lipide
∘ zwischen 15 und 25 g Kohlenhydrate
∘ ein Energiewert zwischen 150 und 250 kcal
- mit einer Viskosität von weniger als 120 mPas⁻¹ bei 20 °C, gemessen mit einem Rotationsviskosimeter vom Typ Koaxialzylinder-Viskosimeter
- mit einem pH-Wert zwischen 7,1 und 7,4
**dadurch gekennzeichnet, dass**:
- das Protein ausschließlich aus ganzen pflanzlichen Proteinen aus der gelben Erbse Pisum sativum besteht
- es mindestens 53 mg Kalzium/100 ml bei einem Kaloriengehalt von 150 kcal enthält und
- mindestens 65 % des zugeführten Kalziums in unlöslicher Form vorliegen.

2. Zusammensetzung nach Anspruch 1, **dadurch gekennzeichnet, dass** die Lipide pflanzliche Öle sind.

3. Verfahren zur Herstellung einer Zusammensetzung nach einem der Ansprüche 1 bis 2, umfassend die folgenden Schritte:
- Hydratisierung eines Isolats aus ganzen Proteinen der gelben Erbse Pisum sativa
- Vermischung des Isolats mit den anderen Inhaltsstoffen, insbesondere Lipiden, Kohlenhydraten, Mineralien und Vitaminen, wobei mindestens 65 % des Kalziums in unlöslicher Form vorliegen
- Einstellung des pH-Werts zwischen 7,1 und 7,5
- Sterilisation der erhaltenen Mischung durch direkte Dampfinjektion.

4. Verfahren nach Anspruch 3,
**dadurch gekennzeichnet, dass** der Hydratisierungsschritt
durch Erhitzen auf eine Temperatur zwischen 35 °C und 65 °C durchgeführt wird.

## Claims

1. A liquid nutritional composition based on plant proteins
- comprising for 100 ml of composition:
∘ between 6 and 10 g of protein
∘ between 5 and 10 g of fats
∘ between 15 and 25 g of carbohydrates
∘ an energy value between 150 and 250 kcal
- having a viscosity lower than 120 mPas⁻¹ at 20°C measured on a "cup and bob" type rotary viscometer
- having a pH between 7.1 and 7.4
**characterised in that**:
- the protein is made up solely of whole plant proteins derived from *Pisum sativum* yellow pea
- it contains at least 53 mg of calcium/100 ml for a 150 kcal composition, and
- at least 65 % of the calcium provided is in insoluble form.

2. The composition according to claim 1, **characterised in that** said fats are vegetable oils.

3. A method for preparing a composition as defined in one of claims 1 to 2 comprising the steps of:
- Hydrating a whole *Pisum sativum* yellow pea protein isolate
- Mixing said isolate with the other ingredients and in particular the fats, the carbohydrates, the minerals and the vitamins, the calcium provided being at least 65% in insoluble form
- Adjusting the pH to between 7.1 and 7.5
- Sterilising the obtained mixture by direct steam injection.

4. The method according to claim 3
**characterised in that** said hydration step is carried out by heating to a temperature between 35°C and 65°C.
